# EUROPEAN PATENT SPECIFICATION

(11) **EP 2 992 565 B1**
(45) Date of publication and mention of the grant of the patent: **08.07.2020**
(21) Application number: 14728601.7
(22) Date of filing: 02.05.2014
(51) Int. Cl.: H01M 8/04, H01M 8/10

(54) **A FUEL CELL SYSTEM**
BRENNSTOFFZELLENSYSTEM
SYSTÈME DE PILE À COMBUSTIBLE

(30) Priority: 02.05.2013 GB 201307959
(43) Date of publication of application: 09.03.2016
(73) Proprietor: Intelligent Energy Limited, Leicestershire LE11 3GB (GB)
(72) Inventor: ROBERTS, Jason, Loughborough Leicestershire LE11 3GB (GB); KARMAZYN, Harry John, Loughborough Leicestershire LE11 3GB (GB); KUPCHO, Kevin M, Loughborough Leicestershire LE11 3GB (GB); BOWMAN, Jeremy David, Loughborough Leicestershire LE11 3GB (GB)
(74) Representative: Creation IP Ltd
(86) International application number: PCT/GB2014/051380
(87) International publication number: WO 2014/177889

(56) References cited:
- JP-A- 2005 203 254
- US-A1- 2007 042 243

## Description

The present disclosure relates to fuel cell systems, and in particular to proton-exchange membrane type fuel cells in which hydrogen is supplied to the anode side of the fuel cell, oxygen is supplied to the cathode side of the fuel cell and water by-product is produced at and removed from the cathode side of the fuel cell.

Such fuel cells comprise a proton exchange membrane (PEM) sandwiched between two porous electrodes, together comprising a membrane-electrode assembly (MEA). The MEA itself is conventionally sandwiched between: (i) a cathode diffusion structure (such as a cathode gas diffusion layer) having a first face adjacent to the cathode face of the MEA and (ii) an anode diffusion structure (such as an anode gas diffusion layer) having a first face adjacent the anode face of the MEA. The second face of the anode diffusion structure contacts an anode fluid flow field plate for current collection and for distributing hydrogen to the second face of the anode diffusion structure. The second face of the cathode diffusion structure contacts a cathode fluid flow field plate for current collection, for distributing oxygen to the second face of the cathode diffusion structure, and for extracting excess water from the MEA. The anode and cathode fluid flow field plates conventionally each comprise a rigid, electrically conductive, material having fluid flow channels in the surface adjacent the respective diffusion structure for delivery of the reactant gases (for example, hydrogen and oxygen) and removal of the exhaust gases (for example, unused oxygen and water vapour).

An important consideration in the operation of such fuel cells is the management of water within the MEA. During operation of a PEM fuel cell, product water from the reaction between hydrogen and oxygen is formed at catalytic sites of the MEA. This water must be exhausted from the MEA via the cathode diffusion structure at the same time that oxygen is transported to the cathode face of the MEA. However, it is also important that the MEA remains suitably hydrated to ensure that the internal electrical resistance of the cell remains within tolerable limits. Failure to control the MEA humidification leads to hot spots and potential cell failure and/or poor electrical cell performance.

A key function during the fuel cell electrochemical reaction between hydrogen and oxygen is the proton migration process via the PEM. The proton exchange process will only occur when the solid state PEM is sufficiently hydrated. With insufficient water present, the water drag characteristics of the membrane will restrict the proton migration process leading to an increase in the internal resistance of the cell. With over-saturation of the PEM there is the possibility that excess water will 'flood' the electrode part of the MEA and restrict gas access to the so called three phase reaction interface. Both these events have a negative effect on the overall performance of the fuel cell.

Although water is produced at the cathode as part of the fuel cell reaction, it is essential to maintain a water balance across the whole MEA. Where dry air is introduced into the cell there is a tendency for the creation of an unbalanced water distribution across the membrane such that the area around the inlet port is drier than elsewhere. Ultimately this could mechanically stress the membrane and lead to uneven current distribution, both of which can lead to premature failure. To counter this, it is known to pre-humidify the air stream prior to its delivery to the active part of the fuel cell. This adds to system complexity and can often be impractical for some fuel cell applications.

In open cathode fuel cells, the cathode fluid flow field plates are open to ambient air, usually assisted by a low pressure air source such as a fan, which provides the dual function of stack cooling and oxygen supply. This allows a very simple fuel cell system to be designed avoiding the large parasitic losses (that is, the electrical power drain of the fuel cell support systems) that would normally be associated with a fuel cell stack utilising a pressurised cathode and a humidification sub-system. However, the dual purpose of the air flow (for both oxygen delivery and air cooling) may lead to a conflict in air flow requirements. A very high stoichiometric air flow across the cathode electrodes is required for cooling and, depending on ambient conditions and stack temperature this may result in a low membrane water content (resulting in low performance) or in extreme cases a continual net water loss from the fuel cell stack over time which will eventually result in the stack ceasing to function. This is because for a set level of stack power output (current density) a balance will be achieved between the water content of the fuel cell polymer membranes and the rate of water removal by the flow of air. A lower current, high air flow and warmer stack will tend to reduce the membrane water content and conversely a higher current, lower air flow and cooler stack will increase the membrane water content.

WO 2007/099360 discloses an electrochemical fuel cell assembly with a stack power controller for periodically and temporarily increasing the current drawn from the fuel cell stack, in addition to or instead of independent current demand external to the fuel cell assembly, during rehydration intervals to increase the hydration level of the fuel cells. US2007/0042243 A1 discloses an apparatus and method for controlling a fuel cell which includes first and second circuitry to selectively short the anode to the cathode. The rate of voltage recovery following shorting can be used as a predictor of appropriate fuel cell hydration and/or to adjust the operational conditions of the fuel cell. JP2005203254 discloses solid oxide fuel cells. that are serially connected and grouped into power generation blocks. Bypass diodes are connected in parallel with respective power generation blocks.

The present invention comprises a fuel cell system, a method of operating a fuel cell system and a computer implemented method as defined in the appended claims.

According to a first aspect of the invention, there is provided a fuel cell system for supplying current to an external load, the fuel cell system comprising:
a first fuel cell stack; the fuel cell system is configured to provide an air flow to the first fuel cell stack to remove water from the first fuel cell stack;
a second fuel cell stack in series with the first fuel cell stack;
a first rectifier in parallel with the first fuel cell stack; and a controller configured to modulate the air flow through the first fuel cell stack, wherein modulation of the air flow comprises decreasing the air flow, independent of current demand on the fuel cell system to provide rehydration intervals in the first fuel cell stack by decreasing the air flow to reduce the rate of water removal from the first fuel cell stack; wherein the first rectifier provides a bypass path around the first fuel cell stack during rehydration intervals.

Such a fuel cell system may not require a fuel cell stack to be isolated from a fuel cell system during the rehydration interval as the first rectifier provides a bypass path for the first fuel cell stack. The fuel cell system can enable the first fuel cell stack to be better and more consistently conditioned, which can improve its performance and life. Also, the reliability of the first fuel cell stack can be increased and the number of failures can be reduced.

The controller may be configured to modulate air flow through the first fuel cell stack on a periodic basis. The controller may be configured to periodically reduce the amount of air flow through the first fuel cell stack from an active value, and then after a predetermined period of time increase the amount of air flow through the first fuel cell stack back to the active value. The controller may be configured to periodically reduce the amount of air flow through the first fuel cell stack to zero and then after a predetermined period of time increase the amount of air flow through the first fuel cell stack from zero.

The controller may be configured to modulate the air flow through the first fuel cell stack in response to measured parameters of the fuel cell system.

The first rectifier may be an active diode. Such an active diode can improve the efficiency with which a rehydration interval can be provided.

A first terminal of the first rectifier may be connected to a first terminal of the first fuel cell stack. A second terminal of the first rectifier may be connected to a second terminal of the first fuel cell stack.

The fuel cell system may further comprise a second rectifier in parallel with the second fuel cell stack. The controller may be configured to modulate air flow through the second fuel cell stack independent of current demand on the fuel cell system to provide rehydration intervals that increase the hydration levels of the second fuel cell stack.

The controller may be configured to modulate the air flow through the first and second fuel cell stacks such that the rehydration intervals of the first and second fuel cell stacks do not overlap. The controller may be configured to alternately modulate the air flow through the first and second fuel cell stacks.

A first terminal of the second rectifier may be connected to a first terminal of the second fuel cell stack. A second terminal of the second rectifier may be connected to a second terminal of the second fuel cell stack.

The controller may be configured to modulate the amount of air flow generated by a fan in order to modulate the air flow through the first and/or second fuel cell stacks.

The controller may be configured to modulate the position of one or more variable occluding members in order to modulate the air flow through the first and/or second fuel cell stacks.

The fuel cell assembly may further comprise a blocking rectifier in series with the first fuel cell stack. Similarly, a blocking rectifier may also be provided in series with the second fuel cell stack.

According to a further aspect of the invention, there is provided a method of operating a fuel cell system, wherein the fuel cell system, comprises a first fuel cell stack, a second fuel cell stack in series with the first fuel cell stack and a first rectifier in parallel with the first fuel cell stack, the method comprising:
providing an air flow to the first fuel cell stack to remove water from the first fuel cell stack; modulating the air flow through the first fuel cell stack, wherein modulating the air flow comprises decreasing the air flow, independently of current demand on the fuel cell system to provide rehydration intervals in the first fuel cell stack by decreasing the air flow to reduce the rate of water removal from the first fuel cell stack; wherein the first rectifier provides a bypass path around the first fuel cell stack during rehydration intervals.

The first rectifier may be an active diode. The method may further comprise:
operating the active diode such that it provides a low resistance when it is forward biased and provides a high resistance when it is reverse biased.

There may be provided a computer program comprising computer program code configured for loading onto a controller associated with a fuel cell system, the fuel cell system, comprising:
a first fuel cell stack;
a second fuel cell stack in series with the first fuel cell stack; and
a first rectifier in parallel with the first fuel cell stack;
wherein the computer program code is configured to:
modulate air flow through the first fuel cell stack independently of current demand on the fuel cell system to provide rehydration intervals that increase the hydration levels of the first fuel cell stack.

There may be provided a computer program comprising computer program code configured for loading onto a controller to modulate air flow through a first fuel cell stack independently of current demand on an associated fuel cell system in order to provide rehydration intervals that increase the hydration levels of the first fuel cell stack.

The computer program may further comprise computer program code configured for loading onto a controller to operate an active diode in parallel with the first fuel cell stack such that it provides a low resistance when the active diode is forward biased and provides a high resistance when the active diode is reverse biased.

There may be provided a computer program, which when run on a computer, causes the computer to:
start a rehydration operation of a fuel cell stack in a fuel cell system when one or more of the following criteria are satisfied:
a) a fuel cell stack core temperature is greater than a minimum core temperature threshold;
b) a fuel cell stack core temperature is less than a maximum core temperature threshold;
c) an ambient air temperature is less than a maximum ambient air temperature threshold;
d) a current drawn from the fuel cell system is greater than a minimum current threshold;
e) a current drawn from the fuel cell system is less than a maximum current threshold; and
f) a signal from a load device, or an application associated with the load device, to indicate that fan pulsing is prohibited has not been received.

The computer program may further cause the computer to:
periodically check whether or not one or more of criteria a) to f) are satisfied, and only start the rehydration operation if the one or more of criteria a) to f) are satisfied.

The computer program may cause the computer to start the rehydration operation of the fuel cell stack in the fuel cell system by modulating air flow through the fuel cell stack independently of current demand on the fuel cell system.

There may be provided a computer program, which when run on a computer, causes the computer to:
stop a rehydration operation of a fuel cell stack in a fuel cell system when one or more of the following criteria are satisfied:
i. a stack voltage has not dropped by a voltage drop threshold amount within a first threshold period of time during the rehydration operation;
ii. a core temperature is greater than a maximum core temperature threshold during the rehydration operation;
iii. a current drawn from the fuel cell stack to an external load falls below a minimum current threshold during the rehydration operation;
iv. a current drawn from the fuel cell stack to an external load is greater than a maximum current threshold during the rehydration operation; and
v. a signal from a load device, or an application associated with the load device, to indicate that an immediate delivery of power is required has been received

The computer program may further cause the computer to:
periodically check whether or not one or more of criteria i) to v) are satisfied, and stop the rehydration operation if the one or more of criteria i) to v) are satisfied.

The computer program may cause the computer to stop the rehydration operation of the fuel cell stack in the fuel cell system by modulating air flow through the fuel cell stack independently of current demand on the fuel cell system.

There may be provided a computer program, which when run on a computer, causes the computer to configure any apparatus, including a controller, fuel cell system, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

Embodiments of the present invention will now be described by way of example and with reference to the accompanying drawings in which:
Figure 1 shows a fuel cell system that includes a first fuel cell stack and a second fuel cell stack;
Figure 2a illustrates the fuel cell system of figure 1 during a rehydration interval of the first fuel cell stack
Figure 2b illustrates the fuel cell system of figure 1 during a rehydration interval of the second fuel cell stack
Figure 3 illustrates plots of various current and voltage waveforms for the system of figure 1 during a rehydration interval of the second fuel cell stack;
Figure 4 illustrates a simulation model of a fuel cell system for providing rehydration intervals;
Figure 5 shows simulation results for the model of figure 4;
Figure 6 shows schematically a fuel cell system used for testing the provision of rehydration intervals;
Figure 7 shows an oscilloscope plot of results from testing the fuel cell system of figure 6;
Figure 8 shows the results of a rehydration interval though an ideal diode;
Figure 9 shows an oscilloscope plot for a system that is similar to that shown in the schematic of figure 6;
Figure 10 illustrates a standard polarisation curve for a fuel cell; and
Figure 11 illustrates a polarisation curve for a rehydration interval.

Examples disclosed herein relate to fuel cell systems that include a controller for modulating air flow through a first fuel cell stack that is in series with a second fuel cell stack in order to provide rehydration intervals that increase the hydration levels of the first fuel cell stack. The system also includes a rectifier in parallel with the first fuel cell stack in order to automatically bypass the first fuel cell stack when its air flow is sufficiently reduced, thereby avoiding the need to disconnect the first fuel cell stack from an external load and enabling a power output from the fuel cell system to be maintained.

The air flow to the fuel cell stack can be periodically modulated so as to temporarily disrupt the equilibrium (as would be determined by existing operating conditions of a fuel cell stack) of membrane water content and rate of water removal to achieve a higher stack and system efficiency. The procedure involves producing excess water at the fuel cell cathode for short periods of time and subsequently operating the stack with a higher performance while the equilibrium with a lower water content is gradually re-established. The process can be repeated at certain interval frequencies as required.

These short periods of time during which excess water is produced are referred to in this specification as "rehydration intervals" or "fan pulses", which expressions are intended to indicate a period of time in which the fuel cell assembly actively controls its operating environment to purposively increase hydration levels above a level that would otherwise prevail based on the external electrical load on the fuel cell and its environmental operating conditions such as temperature. These rehydration intervals can improve the performance and/or life of the fuel cell stack.

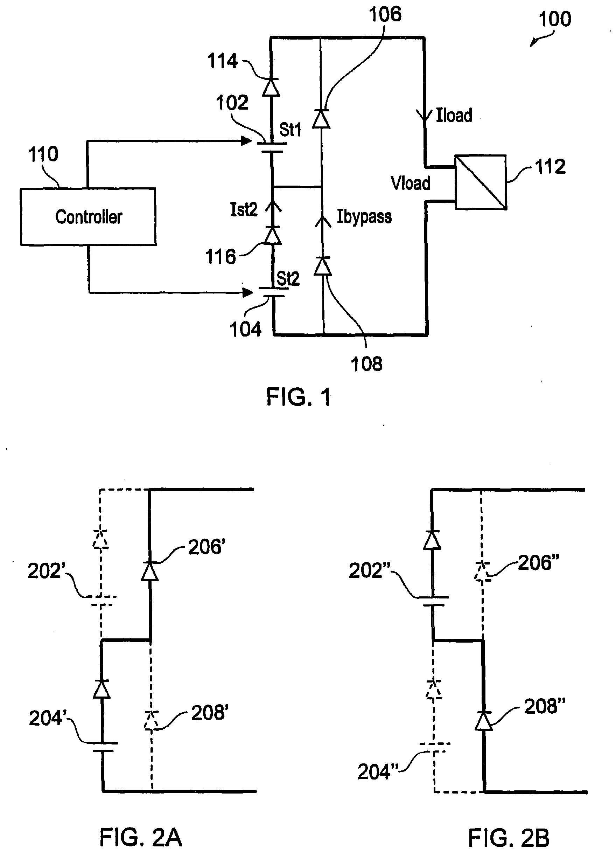

Figure 1 shows a fuel cell system 100 that includes a first fuel cell stack 102 and a second fuel cell stack 104 in series with each other. An external load 112 is connected across the series arrangement of fuel cell stacks 102, 104.

A controller 110 is shown schematically in figure 1 as being capable of controlling the first and second fuel cell stacks 102, 104. In this example, the controller is configured to modulate air flow through the first and second fuel cell stacks 102, 104 independent of current demand on the fuel cell system 100 to provide rehydration intervals that increase the hydration levels of the fuel cell stacks 102, 104. The expression 'independent' in this context is intended to indicate independence from immediate or transient changes in the external electrical load 112 on the fuel cell system 100.

Such modulation of air flow may also be referred to as fan pulsing or cathode throttling and in addition to increasing hydration levels of the fuel cell stacks 102, 104 can also clean the cathode side of the fuel cells in the stacks 102, 104.

The fuel cell system also includes a first rectifier 106 connected in parallel with the first fuel cell stack 102, and a second rectifier 108 is connected in parallel with the second fuel cell stack 104. That is, a first terminal of the first rectifier 106 is connected to a first terminal of the first fuel cell stack 102, and a second terminal of the first rectifier 106 is connected to a second terminal of the first fuel cell stack 102. Also, a first terminal of the second rectifier 1080 is connected to a first terminal of the second fuel cell stack 104, and a second terminal of the second rectifier 108 is connected to a second terminal of the second fuel cell stack 106. As will be described below, the first and second rectifiers 106, 108 provide bypass paths during the hydration intervals of the associated fuel cell stacks 102, 104.

Also shown in figure 1 are optional third and fourth rectifiers 114, 116. The third and fourth rectifiers 114, 116 are examples of blocking rectifiers/diodes. The third rectifier 114 is in series with the first fuel cell stack 102, and the fourth rectifier 116 is in series with the second fuel cell stack 104. The first rectifier 106 is in parallel with the series connection of the first fuel cell stack 102 and the third rectifier 114. The second rectifier 108 is in parallel with the series connection of the second fuel cell stack 104 and the fourth rectifier 116. The third and fourth rectifiers 114, 116 are series connected with the same bias as each other such that each is forward biased and therefore conducting when the associated fuel cell stack 102, 104 is generating an output voltage, and is reverse biased when the associated fuel cell stack 102, 104 is not generating an output voltage. In this way, the fuel cell stacks 102, 104 are protected from reverse currents whilst they are not operational.

The third and fourth rectifiers 114, 116 can optionally be provided on the cathode side of the fuel cell stacks 102, 104 and can prevent reverse current flow and electrolysation when the fuel cell stacks 102, 104 are un-gassed during a rehydration interval.

Figure 2a illustrates the fuel cell system of figure 1 during a rehydration interval of the first fuel cell stack 202'. During this rehydration interval the second fuel cell stack 204' is allowed to operate normally. The rehydration interval is provided by the controller (not shown in figure 2a) modulating the air flow through the first fuel cell stack 202', for example by reducing the air flow to zero. The voltage produced by the first fuel cell stack 202' therefore drops to zero and the current flows through the first rectifier 206' instead of the first fuel cell stack 202', thereby bypassing the first fuel cell stack 202'. In contrast, the second rectifier 208' is reverse biased as the associated second fuel cell stack 204' is generating an output voltage. Components that are not conducting a significant amount of current are shown in dashed lines in figure 2a.

Figure 2b illustrates the fuel cell system of figure 1 during a rehydration interval of the second fuel cell stack 204". The rehydration interval is provided by the controller (not shown in figure 2b) modulating the air flow through the second fuel cell stack 204" in the same way as discussed above in relation to figure 2a.

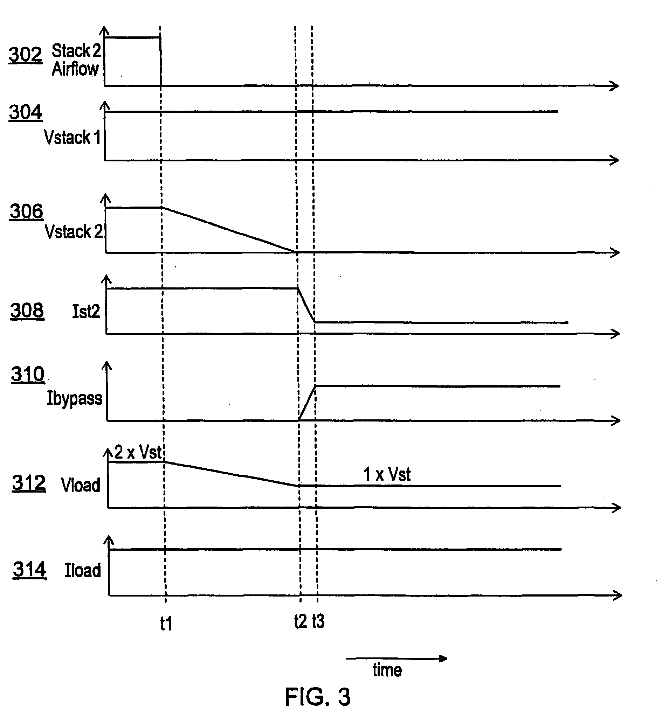

Figure 3 illustrates plots of various current and voltage waveforms for the system of figure 1 during a rehydration interval of the second fuel cell stack, as shown in figure 2b. The rehydration interval starts at time t1.

Plot 302 illustrates air flow to the second fuel cell stack. The air flow is modulated by the controller of figure 1. The air flow 302 starts off at an initial value, which may be referred to as an "active value" in between rehydration intervals. The active value can be automatically set and adjusted in accordance with the requirements of an electrical load.

After a time t1, the air flow 302 to the second fuel cell stack is reduced from the active value to zero. In this example a step change in the air flow 302 is applied, although in other examples a more gradual decrease in the air flow 302 may be used. The change in air flow 302 at time t1 may be due to a change in operational mode from "fan assisted" to "non-fan assisted" as one example of how the air flow may be modulated.

The air flow can be modulated by modulating the position of one or more variable occluding members, such as louvers, thereby selectively opening and closing the occluding members to allow or permit air to flow through the fuel cell stack. Alternatively or additionally, air flow can be modulated by controlling operation of a fan for blowing or sucking air though the fuel cell stack. In such examples, the fuel cell stack may be said to be operating in a "fan assisted" mode of operation when the fan is used to suck or blow air through the fuel cell stack and in a "non-fan assisted" mode of operation when a fan is present but not used (for example, it is powered down). Such a "non-fan assisted" mode of operation is an example of how air flow can be modulated (by switching off the fan) to provide a rehydration interval.

It will be appreciated that the air flow 302 will be returned to an active value after the end of the rehydration interval, although this is not shown in figure 3.

Following the removal of the air flow 302 to the second fuel cell stack, the output voltage of the second fuel cell stack gradually reduces and reaches zero at time t2, as shown by plot 306. During this time, the voltage of the first fuel cell stack remains constant between times t1 and t2 as shown in plot 304; it is unaffected by the change in air flow to the second fuel cell stack.

The current through the second fuel cell stack remains constant up until t2, as shown in plot 308. At t2, when the output voltage 306 of the second fuel cell stack reaches zero, the current 308 through the second fuel cell stack starts to reduce. At t3, the current 308 through the second fuel cell stack reaches its minimum value and then remains constant at that minimum value for the duration of the rehydration interval. In this example, the minimum value of the current through the second fuel cell stack is not zero because the fuel cell stack is still capable of converting a lower level of hydrogen and oxygen to electricity from the static air that surrounds the cell during a fan pulse, which is a non-fan assisted mode of operation

Plot 310 shows the bypass current through the second rectifier, which is in parallel with the second fuel cell stack. It can be seen that between times t2 and t3, the bypass current 310 increases from zero to a maximum value at time t3. The increase in the bypass current is coversely related to the decrease in the current 308 through the second fuel cell stack such that the sum of the two currents 308, 310 is constant. This can be seen from plot 314, which shows that the current through the load is a constant value both before and during the rehydration interval.

The voltage at the load however does decrease during a rehydration interval, as shown by plot 312. The decrease in the output voltage of the second fuel cell stack (as shown by plot 306) causes a corresponding reduction in the voltage at the load 312. In this example, the first and second fuel cell stacks have the same number of fuel cells and generate the same output voltage when they are fully operational. Therefore, the voltage across the load 312 is reduced by 50% during the rehydration interval.

Figure 3 illustrates a rehydration interval for a single fuel cell stack (the second fuel cell stack). It will be appreciated that the same controller can be used to similarly provide rehydration intervals for other fuel cell stacks in the same fuel cell system. For example, the controller is configured to alternately modulate the air flow through first and second fuel cell stacks in a fuel cell system. In some examples, it can be advantageous for the air flow through the first and second fuel cell stacks to be modulated such that the rehydration intervals of the first and second fuel cell stacks do not overlap. In this way, the current supplied to a load of the fuel cell system can be kept substantially constant.

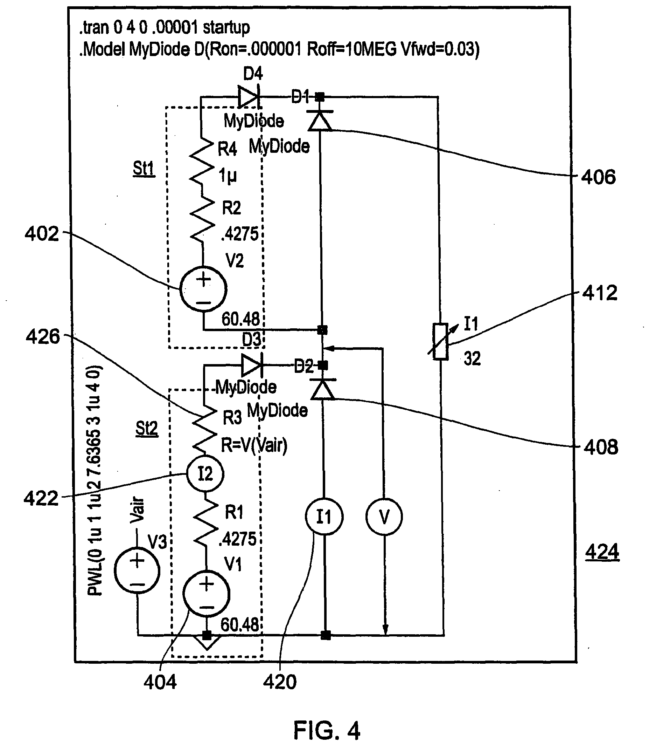

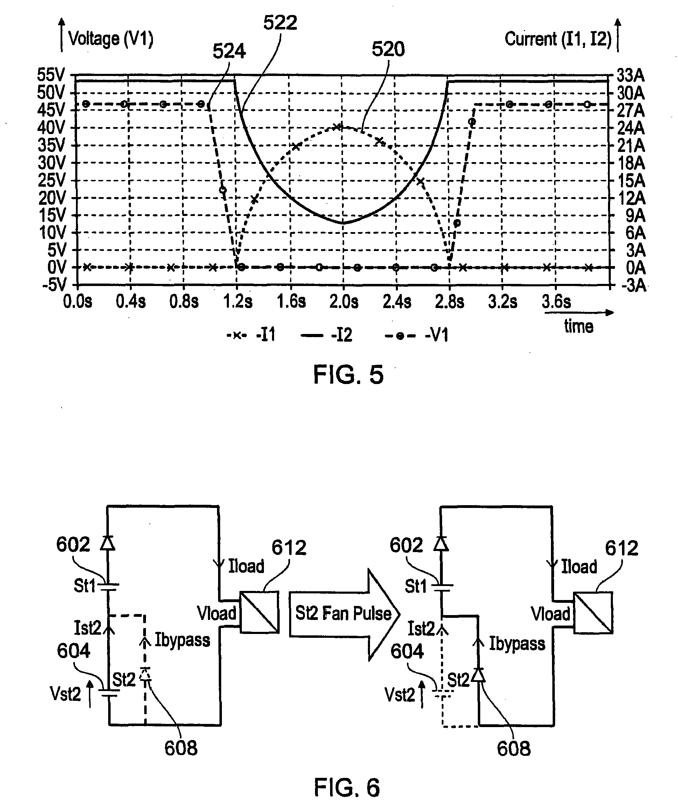

Figure 4 illustrates a simulation model of a fuel cell system for providing rehydration intervals. Figure 5 shows simulation results for the model of figure 4.

The model of figure 4 includes a first voltage source 402, which is representative of a first fuel cell stack, and a second voltage source 404, which is representative of a second fuel cell stack. The model also includes a first rectifier 406, a second rectifier 408 and a load 412, which are similar to the corresponding components of figure 1. A variable resistor 426 is shown in series with the second voltage source 404. The resistance of the variable resistor 426 is used to model the amount of air flow to the second fuel cell stack.

The values of the components are taken or projected from an end-of-life (EOL) polarisation curve. 60.48V is the stack potential based on the intercept point of the ohmic region of the polarisation curve at 0A. The fuel cell stack resistance is modelled as 0.4275 ohms based on the linear ohmic region. The resistance of the variable resistor 426 is set at 7.6365 ohms to model a non-fan assisted mode of operation, which presents 7.5A for series resistance.

Also shown in figure 4 are the following sensors:
- a first ammeter 420 for measuring the bypass current through the second rectifier 408;
- a second ammeter 422 for measuring the current through the second voltage source/fuel cell stack 404; and
- a voltmeter 424 for measuring the voltage across the second voltage source/fuel cell stack 404.

Readings taken by each of these sensors are shown in figure 5. The bypass current through the second rectifier is shown with line 520. The current through the second voltage source/fuel cell stack is shown with line 522. The voltage across the second voltage source/fuel cell stack is shown with line 524.

Figure 5 shows a rehydration interval that starts at 1 second and ends at 3 seconds on the horizontal time axis.

The simulation results show an initially energised second fuel cell stack in a fan assisted mode of operation. After 1 second the series resistance is increased linearly by increasing the resistor of the variable resistor shown in figure 4. This increase in resistance represents a reduction in air flow to the fuel cell stack such that it transitions to a non-fan assisted mode of operation.

The increase in the series resistance causes the voltage across the second fuel cell stack to drop to zero between 1 second and 1.2 seconds, as shown by line 524. The current through the second fuel stack then reduces from 32A at 1.2 seconds towards 7.5A at 2 seconds, as shown by line 522. At the same time, the current through the bypass diode increases from 0A to 24.5A as shown by line 520. Therefore, the load current remains constant. In this example, even though the second fuel cell stack is bypassed with an extremely low resistance path (0.000001 ohms) it still contributes 7.5A (depending on the availability of air at the cathode of the fuel cells) to the load.

To illustrate how the circuit recovers from a rehydration interval/fan pulse, the resistance of the variable resistor is reduced after 2 seconds back to a value that models a fan assisted mode of operation. It can be seen that the current through the second fuel cell stack 522 gradually increases back to 32A and that the bypass current correspondingly gradually decreases back to zero at 2.8 seconds. The voltage across the second fuel cell stack 524 then returns back to its pre-rehydration interval level.

After a suitable time interval, e.g. between 2 and 5 minutes, the next rehydration operation is initiated (not shown in figure 4). Any suitable time interval may be used that is effective to provide a useful average increase in cell voltage. Depending upon ambient conditions, such as temperature and humidity, and on whether the fuel cell is run under a constant fixed or variable load, the time interval might be as short as 1 minute or as long as 2 hours, for example.

The air flow to a fuel cell stack can be modulated to provide rehydration intervals in response to measured parameters of the fuel cell system, for example parameters that are representative of the "health" or state of the stack. Such parameters can include the stack voltage and stack current, which will give polarisation information and therefore the "health" of the stack. In one example, a rehydration interval can be started if one or more of the measured parameters reach a threshold value.

Alternatively or additionally, the rehydration operations can be implemented automatically on a fixed periodic basis. It will be understood that a further control algorithm may be used to switch the fuel cell system 100 between a normal mode in which no rehydration operations take place, and a rehydration mode in which the periodic and temporary rehydration operations are performed. The periodicity of the rehydration operations may be controlled according to some measurable stack operating parameter, such as average temperature, humidity, voltage profile, current profile and power demand etc. The duty cycle of the rehydration intervals may be controlled according to some measurable stack operating parameter such as average temperature, humidity, voltage profile, current profile and power demand etc.

In some implementations, a controller can periodically make a decision as to whether or not to start a rehydration operation based on a measurable stack operating parameter. For example, every ten minutes, the controller may process one or more measurable stack operating parameters and then only start a rehydration operation if the one or more measurable stack operating parameters satisfy one or more criteria. Similarly, during a rehydration operation, a controller may cancel or stop the rehydration operation in accordance with one or more measurable stack operating parameters. Such cancellation may be premature inasmuch as it may be before the scheduled end of the rehydration operation, for example less than a predetermined duration of the rehydration operation that would otherwise apply.

A rehydration operation / fan pulse may only be started if one or more of the following criteria are satisfied; that is, it may be prevented or postponed if one or more of the following criteria are not satisfied. Alternatively, a rehydration operation / fan pulse may automatically be started when one or more of the following criteria are satisfied.
a) The fuel cell stack core temperature is greater than a minimum core temperature threshold, such as a temperature that is considered satisfactorily high enough to ensure that the water balance on the cathode can be managed by evaporation to the ambient air. In one example, the minimum core temperature threshold may be an absolute value of about 30°C, 35°C or 40°C, or a relative value of 15°C, 20°c, or 25°C below a target running temperature of the stack core. The target running temperature of the stack core may be about 55°C.
The fuel cell stack core temperature may be defined as the temperature of metal components measured inside the fuel cell stack. In order to account for variations in core temperature caused by variations in intake air temperature, the core temperature can be measured at a variety of points within the fuel cell stack. This may be 2, 3 or 4 positions per fuel cell stack, depending on the system type. In a system with two stacks, this means that the core temperature could be measured at 4, 6 or 8 positions, for example. Having a plurality of temperature values can provide the opportunity to determine a minimum, maximum and mean core temperature for a combination of multiple fuel cell stacks or for each fuel cell stack in isolation.
In this example, a minimum value of all measured core temperatures (for each of a plurality of fuel cell stacks, if there is more than one) can be compared with the minimum core temperature threshold.
As indicated above, use of a fan pulse can provide at least two major benefits to system performance and efficiency, firstly through the creation of water on the cathode which can increase performance by lowering the cell impedance and secondly by cleaning (reduction of non-platinum elements) of the catalyst. It can therefore be important to fan pulse in order to maintain efficiency and performance, even if satisfactory water levels in the stack are present, in order to clean the catalyst and thereby increase or maximise the reaction sites available. This could lead to a problem where excessive water can be generated in the stack due to the fan pulse which can cause cathode flooding. Therefore, use of a minimum core temperature threshold can improve the fan pulse operation.
b) The fuel cell stack core temperature is less than a maximum core temperature threshold, such as a temperature that is considered satisfactorily low enough to ensure that the stack core temperature can be cooled back to normal operating temperature following the fan pulse. In one example, the maximum core temperature threshold may be an absolute value of about 55°C, 60°C or 65°C, or a relative value of 2°C, 5°C, or 10°C above a target running temperature of the stack core.
In this example, a maximum value of all measured core temperatures (for each of a plurality of fuel cell stacks, if there is more than one) can be compared with the maximum core temperature threshold.
The process of stopping the fans in order to limit the supply of oxygen to the cathode (and thereby cause a reduction in voltage of the stack) results in a decrease of cooling air to the stack. As a result, for the duration of the fan spool-down time, there continues to be a delivery of reactant air but the stack core temperature climbs until the reaction air stops and the reaction ceases. Therefore, use of a maximum core temperature threshold can improve the fan pulse operation.
c) The ambient air temperature (in the vicinity of the fuel cell system) is less than a maximum ambient air temperature threshold, such as a temperature that is considered satisfactorily low enough to ensure that the stack core temperature can be cooled back to normal operating temperature following the fan pulse. In one example, the maximum ambient air temperature threshold may be an absolute value of about 35°C, 40°C or 45°C
For the same reasons discussed above under b), use of a predetermined maximum ambient air temperature can improve the fan pulse operation.
d) The current drawn from the fuel cell system is greater than a minimum current threshold, such as a current level that is considered sufficient to consume the oxygen from the cathode to reduce the cell voltage through fluidic limiting. In one example, the minimum current threshold may be about 0.046A/cm², 0.051Acm², or 0.054A/cm². Such current thresholds are current per cm² of the fuel cell active area.
Because any air movement around the stack will result in air change at the cathode face, it can be advantageous for the current drawn (or being attempted to be drawn) from the fuel cell system to be sufficient to consume any new oxygen becoming present at the cathode face.
e) The current drawn from the fuel cell system is less than a maximum current threshold. The maximum current threshold can be based on ambient temperature and can limit the thermal rejection that must be removed by air-cooling when the stack comes out of the fan pulse. The controller can automatically set the level of the maximum current threshold in accordance a measured value for the ambient temperature.
In one example, the maximum current threshold can be determined using a lookup table and a measured value of ambient temperature. Broadly speaking, the maximum current threshold can be inversely proportional to the ambient temperature, that is, as the ambient temperature increases, the maximum current threshold is decreased.
An example lookup table could contain the following information:

| Ambient temperature between | maximum current threshold (A/cm²) |
|---|---|
| -10°C and 25°C | 0.59 |
| 25°C and 35°C | 0.51 |
| 35°C and 45°C | 0.34 |

f) a signal from a load device, or an application associated with the load device, to indicate that fan pulsing is prohibited has not been received.
As described above, the process of fan pulsing causes a temporary reduction in output voltage, therefore reducing the net power output of the fuel cell system. For this reason, fan pulse triggering can be performed infrequently and / or it can be prohibited by the load-drawing application, in some examples by software communication. In some implementations, when fan pulsing is not prohibited, then rehydration operation triggering can be performed periodically, for example every 10 minutes of operation.

In some examples, a rehydration operation / fan pulse may be abandoned or stopped partway through the rehydration operation / fan pulse, if one or more of the following criteria are satisfied. In some cases, the rehydration operation / fan pulse can be abandoned by turning on the fans which supply cooling and reactant air to the fuel cell stack and opening the louvers.
i. If the stack voltage has not dropped by a voltage drop threshold amount within a first threshold period of time during the fan pulse. The voltage drop threshold amount may be 0V, 0.5V, 2V, for example. The first threshold period of time may be 10 second, 15 seconds or 20 second after the start of a rehydration operation, which may be the issuance of a stop command to fans associated with the fuel cell stack to be fan pulsed (spool down time). If the stack voltage fails to drop due to an excessive supply of oxygen, despite louvers being closed and fans stopped for example, then this can be due to ram air effects.
   Ram air effects can be present where the fuel cell system is in a motive application and the forward movement of the application causes increased air pressure at the air inlet of the system. Ram air effects can generally be useful, as they can decrease the parasitic loads on the system, thereby requiring less effort by cooling/reactant fans. However, they can also pose challenges to the design, such as causing unintended delivery of air to the fuel cell stack, for example during fan pulsing. This can happen when the ram air causes a pressure at the inlet which overcomes the sealing of the inlet louvers. This reduced airflow can cause reaction in the fuel cell (which generates heat) but does not provide sufficient cooling airflow.
ii. if the fuel cell stack core temperature is greater than a maximum core temperature threshold during the fan pulse. The maximum core temperature threshold may be a relative value of 5°C, 10°C or 15°C above a target running temperature of the stack core. If the stack voltage drops but the temperature of the stack core becomes too hot, then this might also be due to ram air effects providing sufficient air-flow such that limited reaction sites are being supplied oxygen but insufficient sites are being supplied to cause the output voltage to rise.
   In this example, the maximum value of all measured core temperatures for only the specific fuel cell stack that is being fan pulsed can be compared with the maximum core temperature threshold.
iii. if the current drawn from the fuel cell stack to the external load falls below a minimum current threshold during the fan pulse. The minimum current threshold may be 0.036A/cm², 0.051A/cm² or 0.059A/cm². If the current drawn from the system drops below the threshold which will allow the stack to discharge and remain discharged then discharge of the stack may not be successful.
iv. if the current drawn from the fuel cell stack to the external load is greater than a maximum current threshold during the fan pulse. As above, the maximum current threshold can be based on ambient temperature and can limit the thermal rejection that must be removed by air-cooling when the stack comes out of the fan pulse. In one example, the maximum current threshold may be about x, y, or z.
v. a signal from a load device, or an application associated with the load device, to indicate that an immediate delivery of power is required has been received.

The values of one or more of the thresholds mentioned above under criteria a) to f) and i) to iv) or can be set so as to provide a triggering regime that can achieve different life goals of a fuel cell stack, for example best efficiency though life versus total energy delivered. The specific threshold values used can depend upon a specific application or intended use of the fuel cell system.

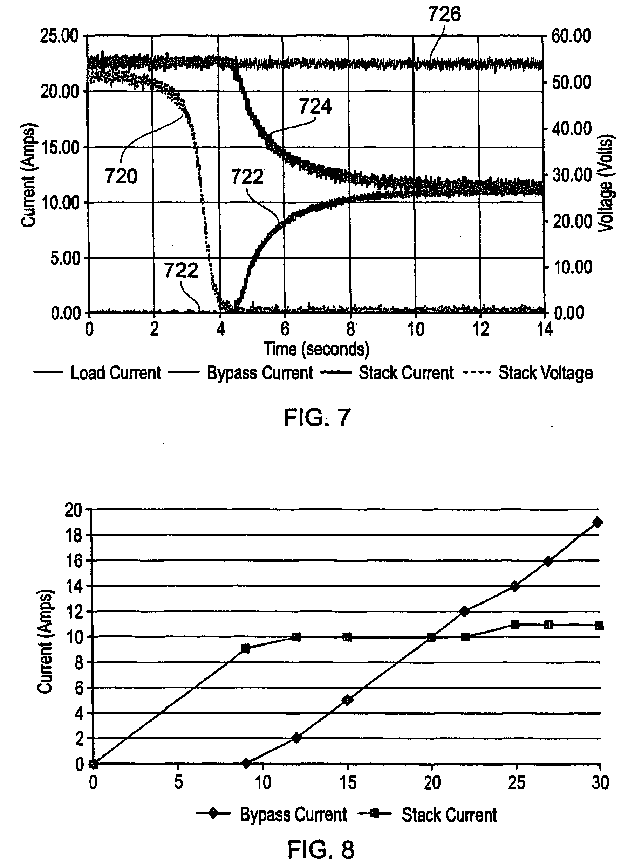

Figure 6 shows schematically a fuel cell system that was used for testing the provision of rehydration intervals as disclosed herein. Figure 7 shows the associated test results. Fuel cell modules containing 72 cell stacks were used for the first and second fuel cell stacks 602, 604.

An active diode 608 was fitted in parallel across the second fuel cell stack 604 to provide the bypassing capability. Such an active diode 608 may also be referred to as an ideal diode. The active diode 608 is shown as a conventional diode in figure 6 for ease of illustration. However, it will be appreciated that an active diode can be embodied by an actively controlled switch such as a field effect transistor (FET), optionally a MOSFET, that is driven in order to behave as a rectifier.

With the load unit 612 set to a constant load, the second fuel cell stack was placed into a fan pulse mode of operation, during which the air flow through the second fuel cell stack 604 was modulated such that it was periodically reduced in order to start a rehydration interval and then increased to end a rehydration interval. The drawing on the left-hand side of figure 6 illustrates the current flow path between rehydration intervals. The drawing on the right-hand side of figure 6 illustrates the current flow path during a rehydration interval, once the potential of the second fuel cell stack 604 has decayed to 0V. At this point the active diode 608 is driven 'hard on', which can involve a FET being controlled such that only 25mV is dropped across the active diode.

The test was repeated for load currents (which is the sum of the bypass current and stack current) between 0A and 30A to illustrate the current through both current paths, as shown in figure 8.

Figure 7 shows an oscilloscope plot for the fuel cell system of figure 6. In particular, the following values are shown, all of which are identified in figure 6: second stack potential 720 (Vst2); bypass current 722 (Ibypass); second stack current 724 (Ist2); and the load current 726 (Iload).

In this example fans are spooled down and louvers are used to stop the airflow across the cathode of the second fuel cell stack for the rehydration interval, although in other examples only one of these mechanisms may be used. Once the stack potential 720 collapses to zero volts, the current starts to conduct through the bypass rather than through the stack. The stack continues to contribute around 10/11A during the rehydration interval, which may be due to the amount of air around the stack and/or the condition of the stack. However as the stack voltage hasn't gone negative it is still operating in a safe zone and the stack is still conditioned successfully.

Figure 8 confirms that the stack will contribute this level of current in its non-fan assisted state and that the bypass circuit redirects the remainder of current from the load. The horizontal axis of figure 8 illustrates load currents (the load current is the sum of the bypass current and stack current) from 0A to 30A. The vertical axis represents the level of the individual stack and bypass currents. As can be seen from the non-zero values of the stack current in figure 8, the stack is capable of providing (lower) current to the output during a fan pulse from static air. The increasing value for the bypass current in figure 8 shows how the rest of the system current is successfully diverted around the bottom stack so that it can be fan pulsed and stay within the safe region of the polarisation curve.

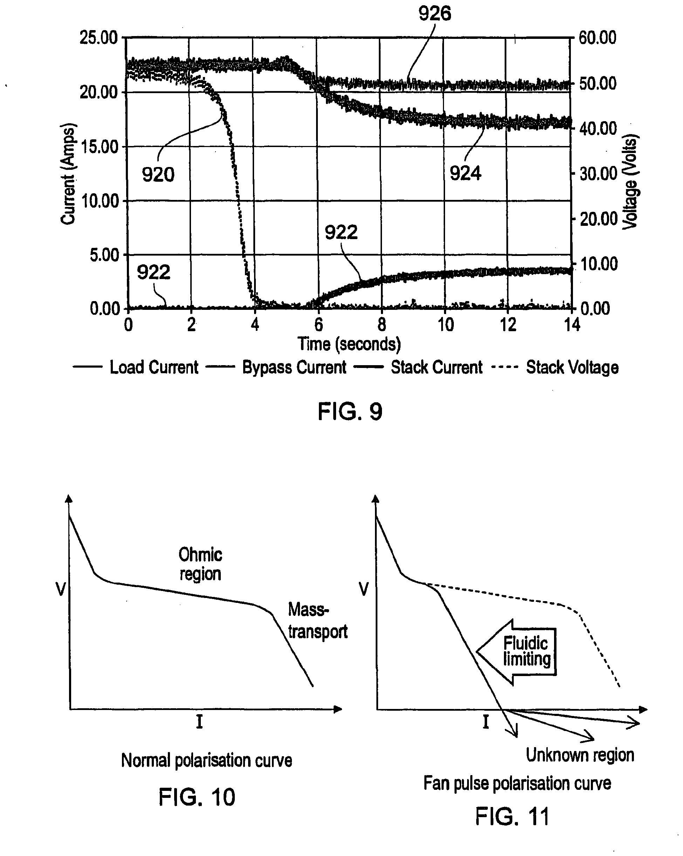

Figure 9 shows an oscilloscope plot for a system that is similar to that shown in the schematic of figure 6, but uses a conventional silicon diode (or the body diode of a FET) instead of an active diode. Bypassing a fuel cell stack with such a component has demonstrated that the stack can end up passing into an unknown area of the polarisation curve that could have damaging effects on the cells. As is know in the art, a polarization curve for a fuel cell characterises the cell voltage as a function of current.

In the same way as figure 7, figure 9 shows the following values: second stack potential 920 (Vst2); bypass current 922 (Ibypass); second stack current 924 (Ist2); and the load current 926 (Iload).

In this example, the diode in parallel with the fuel cell stack creates a negative potential (clamped to --0.6V for a silicon diode, rising to over 1V as the current increases) across the stack and increases the balance of the current sharing more toward the stack. Despite the negative potential, the stack is not being electrolysed at this point because the charge on the stack (due to the availability of hydrogen at the anode) means that current does not flow in the reverse direction. In some applications a blocking diode on the cathode of the stack can prevent reverse current flow and electrolysation when un-gassed.

A comparison between figure 7 and figure 9 shows that using a conventional diode (rather than a switch or ideal diode) causes more current to flow through the stack during a rehydration interval, which is disadvantageous because forcing current through the stack can cause the potential across the stack to go negative and place the stack in a reduction region on its polarisation chart, which is detrimental for the long term health. Also, figure 9 shows that the time taken for the bypass diode to start conducting is over a second longer, resulting in a longer fan pulse than would be required for an active diode. It will be appreciated that a shorter fan pulse enables the stacks to function in a normal mode of operation for longer, thereby improving the efficiency of the overall system. Therefore, in some applications, use of an active diode or switch can be particularly advantageous.

Examples disclosed herein that use an ideal diode as a bypass circuit for one of a plurality of fuel cell stacks in series allow stacks to be independently fan pulsed. Using an actively controlled MOSFET as the ideal diode can divert current around the stack when fan pulsing occurs so that there is no downtime during fan pulsing and no energy is wasted. The pulsed stack can be held at 0V, but current from the remaining charged stacks may have no effect on it. This can also prevent fan pulsed energy being wasted into an artificial load such as an internal load and can mitigate the requirement for bulky power resistors in the fuel cell system.

A secondary benefit is that a stack can be easily isolated from a system (whether for reliability or optimised drive cycle purposes), during which time the system can continue to provide power to the load albeit at a reduced level.

Examples disclosed herein can be particularly suitable for air-cooled and evaporatively cooled fuel cell stacks.

Systems disclosed in this document may not require a fuel cell stack to be isolated from a fuel cell system when fan pulsing, and the rehydration interval may be shorter than is achievable with the prior art. Also, the importance of controlling oxygen around the cells can be reduced when compared with the prior art. The fuel cell stacks can continuously be connected to the system load and poor air seals may not damage the fuel cell stacks as may be the case with methods of fan pulsing that use bulky power resistors. If power resistors are used and the airflow is still high then the stack energy can blow a fuse and remove the ability to fan pulse. Also, power resistors may be terminally damaged, which may not be a concern for one or more of the systems disclosed herein. Further still, no external control of the bypass components may be required as the rectifiers automatically provide the required bypass functionality. For example, the active sensing circuitry of an active diode allows it to turn on and off at the correct time.

Fuel cell stacks can be better and more consistently conditioned using systems disclosed herein, which ultimately can improve their performance and life. Also, the reliability of a stack can be increased and the number of failures can be reduced. This may at least in part be due to the removal of additional components from the prior art systems that are used to support rehydration intervals, which could otherwise be damaged during a rehydration interval. Also, such additional components can be heated during operation which can cause a degradation in stack performance.

It will be appreciated that any reference to two or more fuel cell stacks herein could equally apply to two or more separately addressable sets of fuel cells housed between a single pair of end plates. Such sets of fuel cells can be operationally equivalent to multiple fuel cell stacks that are each housed between their own end plates.

It will be appreciated that any components that are described herein as being coupled or connected could be directly or indirectly coupled or connected. That is, one or more components could be located between two components that are said to be coupled or connected whilst still enabling the required functionality to be achieved.

## Claims

1. A fuel cell system (100) for supplying current to an external load, the fuel cell system (100) comprising:
a first fuel cell stack (102); the fuel cell system (100) is configured to provide an air flow to the first fuel cell stack (102) to remove water from the first fuel cell stack (102);
a second fuel cell stack (104) in series with the first fuel cell stack (102);
a first rectifier (106) in parallel with the first fuel cell stack (102); and
a controller (110) configured to modulate the air flow through the first fuel cell stack (102), wherein modulation of the air flow comprises decreasing the air flow, independent of current demand on the fuel cell system (100) to provide rehydration intervals in the first fuel cell stack (102) by decreasing the air flow to reduce the rate of water removal from the first fuel cell stack (102); wherein the first rectifier provides a bypass path around the first fuel cell stack (102) during rehydration intervals.

2. The fuel cell system of claim 1, wherein the controller (110) is configured to modulate the air flow through the first fuel cell stack (102) on a periodic basis.

3. The fuel cell system of claim 2, wherein the controller (110) is configured to periodically reduce the amount of air flow through the first fuel cell stack (102) from an active value, and then after a predetermined period of time increase the amount of air flow through the first fuel cell stack (102) back to the active value.

4. The fuel cell system of claim 1, wherein the controller (110) is configured to modulate the air flow through the first fuel cell stack (102) in response to measured parameters of the fuel cell system.

5. The fuel cell system of any preceding claim, wherein the first rectifier (106) is an active diode.

6. The fuel cell system of any preceding claim, wherein the fuel cell system further comprises a second rectifier (108) in parallel with the second fuel cell stack (104), and the fuel cell system is configured to provide airflow to the second fuel cell stack (102) to remove water from the second fuel cell stack (102), and wherein the controller (110) is configured to modulate air flow through the second fuel cell stack (104) independent of current demand on the fuel cell system to provide rehydration intervals in the second fuel cell stack (104) by decreasing the air flow to reduce the rate of water removal from the second fuel cell stack (104).

7. The fuel cell system of claim 6, wherein the controller (110) is configured to modulate the air flow through the first and second fuel cell stacks (102, 104) such that the rehydration intervals of the first and second fuel cell stacks do not overlap.

8. The fuel cell system of claim 7, wherein the controller (110) is configured to alternately modulate the air flow through the first and second fuel cell stacks (102, 104).

9. The fuel cell system of any preceding claim, wherein the controller (110) is configured to modulate the amount of air flow generated by a fan in order to modulate the air flow through the first and/or second fuel cell stacks (102, 104).

10. The fuel cell system of any preceding claim, wherein the controller (110) is configured to modulate the position of one or more variable occluding members in order to modulate the air flow through the first and/or second fuel cell stacks (102, 104).

11. The fuel cell system of any preceding claim, further comprising a blocking rectifier (114) in series with the first fuel cell stack (102).

12. The fuel cell system of any preceding claim, wherein upon decreasing the air flow through the first fuel cell stack (102), current flows through the first rectifier (106) to the external load.

13. A method of operating a fuel cell system (100), wherein the fuel cell system is for supplying current to an external load, and the fuel cell system comprises a first fuel cell stack (102), a second fuel cell stack (104) in series with the first fuel cell stack (102) and a first rectifier (106) in parallel with the first fuel cell stack (102), the method comprising:
providing an air flow to the first fuel cell stack (102) to remove water from the first fuel cell stack (102);
modulating the air flow through the first fuel cell stack (102), wherein modulating the air flow comprises decreasing the air flow, independently of current demand on the fuel cell system (100) to provide rehydration intervals in the first fuel cell stack (102) by decreasing the air flow to reduce the rate of water removal from the first fuel cell stack (102); wherein the first rectifier provides a bypass path around the first fuel cell stack (102) during rehydration intervals.

14. A computer program comprising computer program code configured for loading onto a controller associated with a fuel cell system (100), wherein the fuel cell system is for supplying current to an external load, and the fuel cell system comprises a first fuel cell stack (102), a second fuel cell stack (104) in series with the first fuel cell stack (102) and a first rectifier (106) in parallel with the first fuel cell stack (102), and wherein the computer program code is configured to:
modulate the air flow through the first fuel cell stack (102), wherein modulation of the air flow comprises decreasing the air flow, independent of current demand on the fuel cell system (100) to provide rehydration intervals in the first fuel cell stack (102) by decreasing the air flow to reduce the rate of water removal from the first fuel cell stack (102); wherein the first rectifier provides a bypass path around the first fuel cell stack (102) during rehydration intervals.

## Patentansprüche

1. Brennstoffzellensystem (100) zum Zuleiten von Strom zu einer externen Last, das Brennstoffzellensystem (100) umfassend:
einen ersten Brennstoffzellenstapel (102); wobei das Brennstoffzellensystem (100) gestaltet ist, einen Luftstrom zu dem ersten Brennstoffzellenstapel (102) bereitzustellen, um Wasser von dem ersten Brennstoffzellenstapel (102) zu entfernen;
einen zweiten Brennstoffzellenstapel (104) in Reihe mit dem ersten Brennstoffzellenstapel (102);
einen ersten Gleichrichter (106) parallel zu dem ersten Brennstoffzellenstapel (102); und
eine Steuerung (110), die gestaltet ist, den Luftstrom durch den ersten Brennstoffzellenstapel (102) zu modulieren, wobei Modulieren des Luftstroms Senken des Luftstroms umfasst, unabhängig von Strombedarf an dem Brennstoffzellensystem (100), um Rehydrierungsintervalle im ersten Brennstoffzellenstapel (102) durch Senken des Luftstroms bereitzustellen, um die Wasserentfernungsrate von dem ersten Brennstoffzellenstapel (102) zu verringern; wobei der erste Gleichrichter einen Umgehungspfad um den ersten Brennstoffzellenstapel (102) während Rehydrierungsintervalle bereitstellt.

2. Brennstoffzellensystem nach Anspruch 1, wobei die Steuerung (110) gestaltet ist, den Luftstrom durch den ersten Brennstoffzellenstapel (102) auf einer periodischen Basis zu modulieren.

3. Brennstoffzellensystem nach Anspruch 2, wobei die Steuerung (110) gestaltet ist, die Menge an Luftstrom durch den ersten Brennstoffzellenstapel (102) von einem aktiven Wert periodisch zu verringern und dann nach einem vorbestimmten Zeitraum die Menge an Luftstrom durch den ersten Brennstoffzellenstapel (102) wieder auf den aktiven Wert zu erhöhen.

4. Brennstoffzellensystem nach Anspruch 1, wobei die Steuerung (110) gestaltet ist, den Luftstrom durch den ersten Brennstoffzellenstapel (102) in Reaktion auf gemessene Parameter des Brennstoffzellensystems zu modulieren.

5. Brennstoffzellensystem nach einem der vorstehenden Ansprüche, wobei der erste Gleichrichter (106) eine aktive Diode ist.

6. Brennstoffzellensystem nach einem der vorstehenden Ansprüche, wobei das Brennstoffzellensystem weiter einen zweiten Gleichrichter (108) parallel zu dem zweiten Brennstoffzellenstapel (104) umfasst und das Brennstoffzellensystem gestaltet ist, Luftstrom zu dem zweiten Brennstoffzellenstapel (102) bereitzustellen, um Wasser von dem zweiten Brennstoffzellenstapel (102) zu entfernen, und wobei die Steuerung (110) gestaltet ist, Luftstrom durch den zweiten Brennstoffzellenstapel (104) unabhängig von Strombedarf des Brennstoffzellensystems zu modulieren, um Rehydrierungsintervalle im zweiten Brennstoffzellenstapel (104) durch Senken des Luftstroms bereitzustellen, um die Wasserentfernungsrate von dem zweiten Brennstoffzellenstapel (104) zu verringern.

7. Brennstoffzellensystem nach Anspruch 6, wobei die Steuerung (110) gestaltet ist, den Luftstrom durch den ersten und zweiten Brennstoffzellenstapel (102, 104) derart zu modulieren, dass die Rehydrierungsintervalle des ersten und zweiten Brennstoffzellenstapels nicht überlappen.

8. Brennstoffzellensystem nach Anspruch 7, wobei die Steuerung (110) gestaltet ist, abwechselnd den Luftstrom durch den ersten und zweiten Brennstoffzellenstapel (102, 104) zu modulieren.

9. Brennstoffzellensystem nach einem der vorstehenden Ansprüche, wobei die Steuerung (110) gestaltet ist, die Menge an Luftstrom, der durch ein Gebläse erzeugt wird, zu modulieren, um den Luftstrom durch den ersten und/oder zweiten Brennstoffzellenstapel (102, 104) zu modulieren.

10. Brennstoffzellensystem nach einem der vorstehenden Ansprüche, wobei die Steuerung (110) gestaltet ist, die Position eines oder mehrerer variabler Verschlusselemente zu modulieren, um den Luftstrom durch den ersten und/oder zweiten Brennstoffzellenstapel (102, 104) zu modulieren.

11. Brennstoffzellensystem nach einem der vorstehenden Ansprüche, weiter umfassend einen blockierenden Gleichrichter (114) in Reihe mit dem ersten Brennstoffzellenstapel (102).

12. Brennstoffzellensystem nach einem der vorstehenden Ansprüche, wobei beim Senken des Luftstroms durch den ersten Brennstoffzellenstapel (102) Strom durch den ersten Gleichrichter (106) zu der externen Last fließt.

13. Verfahren zum Betreiben eines Brennstoffzellensystems (100), wobei das Brennstoffzellensystem zum Zuleiten von Strom zu einer externen Last dient und das Brennstoffzellensystem einen ersten Brennstoffzellenstapel (102), einen zweiten Brennstoffzellenstapel (104) in Reihe mit dem ersten Brennstoffzellenstapel (102) und einen ersten Gleichrichter (106) parallel zu dem ersten Brennstoffzellenstapel (102) umfasst, das Verfahren umfassend:
Bereitstellen eines Luftstroms zu dem ersten Brennstoffzellenstapel (102), um Wasser von dem ersten Brennstoffzellenstapel (102) zu entfernen;
Modulieren des Luftstroms durch den ersten Brennstoffzellenstapel (102), wobei Modulieren des Luftstroms Senken des Luftstroms umfasst, unabhängig von Strombedarf an dem Brennstoffzellensystem (100), um Rehydrierungsintervalle im ersten Brennstoffzellenstapel (102) durch Senken des Luftstroms bereitzustellen, um die Wasserentfernungsrate von dem ersten Brennstoffzellenstapel (102) zu verringern; wobei der erste Gleichrichter einen Umgehungspfad um den ersten Brennstoffzellenstapel (102) während Rehydrierungsintervalle bereitstellt.

14. Computerprogramm, umfassend Computerprogrammcode, das gestaltet ist, auf eine Steuerung geladen zu werden, die mit einem Brennstoffzellensystem (100) verbunden ist, wobei das Brennstoffzellensystem zum Zuleiten von Strom zu einer externen Last dient und das Brennstoffzellensystem einen ersten Brennstoffzellenstapel (102), einen zweiten Brennstoffzellenstapel (104) in Reihe mit dem ersten Brennstoffzellenstapel (102) und einen ersten Gleichrichter (106) parallel zu dem ersten Brennstoffzellenstapel (102) umfasst, und wobei der Computerprogrammcode gestaltet ist zum:
Modulieren des Luftstroms durch den ersten Brennstoffzellenstapel (102), wobei Modulieren des Luftstroms Senken des Luftstroms umfasst, unabhängig von Strombedarf an dem Brennstoffzellensystem (100), um Rehydrierungsintervalle im ersten Brennstoffzellenstapel (102) durch Senken des Luftstroms bereitzustellen, um die Wasserentfernungsrate von dem ersten Brennstoffzellenstapel (102) zu verringern; wobei der erste Gleichrichter einen Umgehungspfad um den ersten Brennstoffzellenstapel (102) während Rehydrierungsintervalle bereitstellt.

## Revendications

1. Système de pile à combustible (100) pour fournir du courant à une charge externe, le système de pile à combustible (100) comprenant :
un premier empilement de piles à combustible (102) ; le système de pile à combustible (100) est configuré pour fournir un flux d'air au premier empilement de piles à combustible (102) pour retirer de l'eau du premier empilement de piles à combustible (102) ;
un second empilement de piles à combustible (104) en série avec le premier empilement de piles à combustible (102) ;
un premier redresseur (106) en parallèle avec le premier empilement de piles à combustible (102) ; et
un dispositif de commande (110) configuré pour moduler le flux d'air à travers le premier empilement de piles à combustible (102), dans lequel la modulation du flux d'air comprend la diminution du flux d'air, indépendamment de la demande de courant sur le système de pile à combustible (100) pour fournir des intervalles de réhydratation dans le premier empilement de piles à combustible (102) en diminuant le flux d'air pour réduire la vitesse de retrait d'eau du premier empilement de piles à combustible (102) ; dans lequel le premier redresseur fournit un trajet de dérivation autour du premier empilement de piles à combustible (102) durant des intervalles de réhydratation.

2. Système de pile à combustible selon la revendication 1, dans lequel le dispositif de commande (110) est configuré pour moduler le flux d'air à travers le premier empilement de piles à combustible (102) de manière périodique.

3. Système de pile à combustible selon la revendication 2, dans lequel le dispositif de commande (110) est configuré pour réduire périodiquement la quantité de flux d'air à travers le premier empilement de piles à combustible (102) à partir d'une valeur active, et ensuite après une période de temps prédéterminée réaugmenter la quantité de flux d'air à travers le premier empilement de piles à combustible (102) à la valeur active.

4. Système de pile à combustible selon la revendication 1, dans lequel le dispositif de commande (110) est configuré pour moduler le flux d'air à travers le premier empilement de piles à combustible (102) en réponse à des paramètres mesurés du système de pile à combustible.

5. Système de pile à combustible selon l'une quelconque des revendications précédentes, dans lequel le premier redresseur (106) est une diode active.

6. Système de pile à combustible selon l'une quelconque des revendications précédentes, dans lequel le système de pile à combustible comprend en outre un second redresseur (108) en parallèle avec le second empilement de piles à combustible (104), et le système de pile à combustible est configuré pour fournir un flux d'air au second empilement de piles à combustible (102) pour retirer de l'eau du second empilement de piles à combustible (102), et dans lequel le dispositif de commande (110) est configuré pour moduler un flux d'air à travers le second empilement de piles à combustible (104) indépendamment d'une demande de courant sur le système de pile à combustible pour fournir des intervalles de réhydratation dans le second empilement de piles à combustible (104) en diminuant le flux d'air pour réduire la vitesse de retrait d'eau du second empilement de piles à combustible (104).

7. Système de pile à combustible selon la revendication 6, dans lequel le dispositif de commande (110) est configuré pour moduler le flux d'air à travers les premier et second empilements de piles à combustible (102, 104) de sorte que les intervalles de réhydratation des premier et second empilements de piles à combustible ne se chevauchent pas.

8. Système de pile à combustible selon la revendication 7, dans lequel le dispositif de commande (110) est configuré pour moduler alternativement le flux d'air à travers les premier et second empilements de piles à combustible (102, 104).

9. Système de pile à combustible selon l'une quelconque des revendications précédentes, dans lequel le dispositif de commande (110) est configuré pour moduler la quantité de flux d'air généré par un ventilateur afin de moduler le flux d'air à travers les premier et/ou second empilements de piles à combustible (102, 104).

10. Système de pile à combustible selon l'une quelconque des revendications précédentes, dans lequel le dispositif de commande (110) est configuré pour moduler la position d'un ou plusieurs éléments d'occlusion variables afin de moduler le flux d'air à travers les premier et/ou second empilements de piles à combustible (102, 104).

11. Système de pile à combustible selon l'une quelconque des revendications précédentes, comprenant en outre un redresseur de blocage (114) en série avec le premier empilement de piles à combustible (102).

12. Système de pile à combustible selon l'une quelconque des revendications précédentes, dans lequel, lors de la diminution du flux d'air à travers le premier empilement de piles à combustible (102), un courant circule à travers le premier redresseur (106) vers la charge externe.

13. Procédé de fonctionnement d'un système de pile à combustible (100), dans lequel le système de pile à combustible est destiné à fournir un courant à une charge externe, et le système de pile à combustible comprend un premier empilement de piles à combustible (102), un second empilement de piles à combustible (104) en série avec le premier empilement de piles à combustible (102) et un premier redresseur (106) en parallèle avec le premier empilement de piles à combustible (102), le procédé comprenant les étapes consistant à :
fournir un flux d'air au premier empilement de piles à combustible (102) pour retirer de l'eau du premier empilement de piles à combustible (102) ;
moduler le flux d'air à travers le premier empilement de piles à combustible (102), dans lequel la modulation du flux d'air comprend la diminution du flux d'air, indépendamment de la demande de courant sur le système de pile à combustible (100) pour fournir des intervalles de réhydratation dans le premier empilement de piles à combustible (102) en diminuant le flux d'air pour réduire la vitesse de retrait d'eau du premier empilement de piles à combustible (102) ; dans lequel le premier redresseur fournit un trajet de dérivation autour du premier empilement de piles à combustible (102) durant des intervalles de réhydratation.

14. Programme informatique comprenant un code de programme informatique configuré pour charger sur un dispositif de commande associé à un système de pile à combustible (100), dans lequel le système de pile à combustible est destiné à fournir un courant à une charge externe, et le système de pile à combustible comprend un premier empilement de piles à combustible (102), un second empilement de piles à combustible (104) en série avec le premier empilement de piles à combustible (102) et un premier redresseur (106) en parallèle avec le premier empilement de piles à combustible (102), et dans lequel le code de programme informatique est configuré pour :
moduler le flux d'air à travers le premier empilement de piles à combustible (102), dans lequel la modulation du flux d'air comprend la diminution du flux d'air, indépendamment de la demande de courant sur le système de pile à combustible (100) pour fournir des intervalles de réhydratation dans le premier empilement de piles à combustible (102) en diminuant le flux d'air pour réduire la vitesse de retrait d'eau du premier empilement de piles à combustible (102) ; dans lequel le premier redresseur fournit un trajet de dérivation autour du premier empilement de piles à combustible (102) durant des intervalles de réhydratation.
